(19) Europäisches Patentamt
European Patent Office
Office européen des brevets

(11) **EP 4 180 873 A1**

(12) **EUROPEAN PATENT APPLICATION**
published in accordance with Art. 153(4) EPC

(43) Date of publication:
**17.05.2023 Bulletin 2023/20**

(21) Application number: **21837407.2**

(22) Date of filing: **02.07.2021**

(51) International Patent Classification (IPC):
*G03G 9/087* (2006.01)    *C08G 63/668* (2006.01)

(52) Cooperative Patent Classification (CPC):
**C08G 63/668; G03G 9/087**

(86) International application number:
**PCT/JP2021/025119**

(87) International publication number:
**WO 2022/009793 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.07.2020 JP 2020116802**

(71) Applicant: **Mitsubishi Chemical Corporation
Chiyoda-ku
Tokyo 100-8251 (JP)**

(72) Inventors:
• **TACHIBANA Yuka**
**Tokyo 100-8251 (JP)**
• **TAMURA Yoko**
**Tokyo 100-8251 (JP)**
• **OZAWA Tadahiro**
**Tokyo 100-8251 (JP)**
• **KONDO Akifumi**
**Tokyo 100-8251 (JP)**

(74) Representative: **Hoffmann Eitle
Patent- und Rechtsanwälte PartmbB
Arabellastraße 30
81925 München (DE)**

(54) **POLYESTER RESIN AND METHOD FOR PRODUCING SAME, AND TONER**

(57) The polyester resin of the present invention is a polyester resin obtained by using polyethylene terephthalate, a polyvalent carboxylic acid component, and a polyhydric alcohol component, wherein the polyester resin comprises 1 molar part or more in total of at least one type of structural unit selected from the group consisting of a structural unit derived from a tri- or higher valent carboxylic acid and a structural unit derived from a tri- or higher hydric alcohol, with respect to 100 molar parts of structural units derived from an acid component, and wherein a heat absorption is 0.1 to 10 J/g as measured with respect to the polyester resin heat-treated at 150 °C for 30 minutes.

**Description**

[Technical Field]

The present invention relates to a polyester resin, a method for producing the same, and a toner.
Priority is claimed on Japanese Patent Application No. 2020-116802, filed July 7, 2020, the content of which is incorporated herein by reference.

[Background Art]

Polyester resins have excellent properties, because of which the polyester resins are widely used not only as raw materials for fibers, films, etc., but also as binder resins for binding particles, fiber materials, etc. Especially, regarding the polyester resins used as binder resins, there has been a demand for further improvement in performance by enhancing the bonding strength with particles and fiber materials.
For example, in the field of electrophotography, there has been a growing need for on-demand printing, which has necessitated the use of binder resins capable of providing electrophotographic toners adapted to high-speed continuous printing. The continuous printing requires toner durability. In addition, since the temperature of the fixing portion tends to increase, the toner is required to have excellent storage stability.
Furthermore, the toner is also required to have toner fixation strength. When a toner is fixed on paper, the toner melts and diffuses into a paper at the fixing portion, where the toner is allowed to fixedly adhere. This adhesion requires the bonding strength between the paper and the toner adhering thereto, and the strength of the toner layer itself.
For example, Patent Literature 1 discloses a technique which, for improving durability, uses polyethylene terephthalate (PET), an alcohol component, and a carboxylic acid component as raw materials, and uses a polyester resin obtained by reacting these raw materials as a binder for a toner.
Patent Literature 2 discloses a technique for improving toner fixation by using PET having an IV value of 0.40 to 0.75.
Patent Literature 3 discloses a technique that allows a polyester resin to partially have a crystal structure to improve toner fixation strength.

[Citation List]

[Patent Literature]

Patent Literature 1 : Japanese Patent Application Unexamined Publication No. 2009-276791
Patent Literature 2 : Japanese Patent Application Unexamined Publication No. 2017-45041
Patent Literature 3 : Japanese Patent Application Unexamined Publication No. 2012-233037

[Summary of Invention]

[Technical Problem]

However, the techniques described in Patent Literatures 1 to 3 are insufficient in terms of the storability of the toner in a high-temperature environment.
An object of the present invention is to provide a polyester resin that enables production of a toner excellent in storability in a high-temperature environment, toner fixability and toner fixation strength, a method for producing the same, and a toner.
Another object of the present invention is to provide a polyester resin having excellent bonding strength with particles and fiber materials, and a method for producing the same.

[Solution to Problem]

The embodiments of the present invention are as follows.

[1] A polyester resin obtained by using polyethylene terephthalate, a polyvalent carboxylic acid component, and a polyhydric alcohol component,

wherein the polyester resin comprises 1 molar part or more in total of at least one type of structural unit selected from the group consisting of a structural unit derived from a tri- or higher valent carboxylic acid and a structural unit derived from a tri- or higher hydric alcohol, with respect to 100 molar parts of structural units derived from an acid component, and

wherein a heat absorption is 0.1 to 10 J/g as measured with respect to the polyester resin heat-treated at 150 °C for 30 minutes.

[2] The polyester resin according to [1], which has a glass transition temperature of preferably 65 °C or higher, more preferably 65 to 80 °C, even more preferably 70 to 75 °C.

[3] The polyester resin according to [1] or [2], which includes 1 to 5 molar parts in total of at least one type of structural unit selected from the group consisting of the structural unit derived from the tri- or higher valent carboxylic acid and the structural unit derived from the tri- or higher hydric alcohol, with respect to 100 molar parts of the structural units derived from the acid component.

[4] The polyester resin according to any one of [1] to [3], which includes 1 to 3 molar parts in total of at least one type of structural unit selected from the group consisting of the structural unit derived from the tri- or higher valent carboxylic acid and the structural unit derived from the tri- or higher hydric alcohol, with respect to 100 molar parts of the structural units derived from the acid component.

[5] The polyester resin according to any one of [1] to [4], wherein the tri- or higher valent carboxylic acid is at least one of trimellitic acid and trimellitic anhydride.

[6] The polyester resin according to any one of [1] to [5], wherein the tri- or higher hydric alcohol is trimethylolpropane.

[7] The polyester resin according to any one of [1] to [6], which includes 18 to 35 molar parts, more preferably 20 to 32 molar parts of the structural unit derived from the propylene oxide adduct of bisphenol A, with respect to 100 molar parts of the structural units derived from the acid component.

[8] The polyester resin according to any one of [1] to [7], which includes a structural unit derived from a dihydric alcohol other than the propylene oxide adduct of bisphenol A (another or other dihydric alcohols).

[9] The polyester resin according to [8], wherein the another or other dihydric alcohols is or are at least one of polyoxyethylene-(2.0)-2,2-bis(4-hydroxyphenyl)propane and ethylene glycol.

[10] The polyester resin according to any one of [1] to [9], wherein the polyethylene terephthalate is at least one of recycled polyethylene terephthalate and polyethylene terephthalate using a plant-derived raw material.

[11] The polyester resin according to any one of [1] to [10], wherein the proportion of an acid component derived from the polyethylene terephthalate to total 100 mol% of the acid component is preferably 40 to 85 mol%, more preferably 50 to 85 mol%, still more preferably 60 to 85 mol%.

[12] The polyester resin according to any one of [1] to [11], wherein the proportion of the polyvalent carboxylic acid component to total 100 mol% of the acid component is preferably 15 to 60 mol%, more preferably 15 to 50 mol%, still more preferably 15 to 40 mol%.

[13] The polyester resin according to any one of [1] to [12], wherein the IV value of the polyethylene terephthalate is preferably 0.2 to 1.2, more preferably 0.3 to 1.1, even more preferably 0.4 to 0.6.

[14] The polyester resin according to any one of [1] to [13], which includes a structural unit derived from a divalent carboxylic acid.

[15] The polyester resin according to [14], wherein the divalent carboxylic acid is at least one selected from the group consisting of terephthalic acid, isophthalic acid and adipic acid.

[16] The polyester resin of any one of [1] to [15], wherein the heat absorption is preferably 0.1 to 7 J/g, more preferably 0.2 to 5 J/g, even more preferably 0.2 to 2.5 J/g.

[17] The polyester resin of any one of [1] to [16], which has a softening temperature (T4) of preferably 110 to 150 °C, more preferably 110 to 140 °C.

[18] The polyester resin of any one of [1] to [17], which has an acid value (AV) of preferably 10 to 40 mgKOH/g, more preferably 10 to 30 mgKOH/g.

[19] A toner including the polyester resin of any one of [1] to [18].

[20] A method for producing a polyester resin, including a step of reacting a mixture containing polyethylene terephthalate, a polyvalent carboxylic acid component, and a polyhydric alcohol component, wherein the mixture includes 18 to 35 molar parts of a propylene oxide adduct of bisphenol A, and 1 to 5 molar parts in total of at least one selected from the group consisting of a tri- or higher valent carboxylic acid and a tri- or higher hydric alcohol, with respect to 100 molar parts of an acid component.

[21] The method according to [20], wherein the step of reacting the mixture includes at least one of an esterification reaction and a transesterification reaction.

[22] The method according to [20] or [21], which further includes a polycondensation reaction performed after the step of reacting the mixture.

[23] The method according to any one of [20] to [22], wherein the mixture includes 18 to 35 molar parts of the propylene oxide adduct of bisphenol A, and 1 to 3 molar parts in total of at least one selected from the group consisting of the tri- or higher valent carboxylic acid and the tri- or higher hydric alcohol, with respect to 100 molar parts of the acid component.

[24] The method according to any one of [20] to [23], wherein the tri- or higher valent carboxylic acid is at least one of trimellitic acid and trimellitic anhydride.

[25] The method according to any one of [20] to [24], wherein the tri- or higher hydric alcohol is trimethylolpropane.

[26] The method according to any one of [20] to [25], wherein the polyethylene terephthalate is at least one of recycled polyethylene terephthalate and polyethylene terephthalate using a plant-derived raw material.

[27] The method according to any one of [20] to [26], wherein the proportion of an acid component derived from the polyethylene terephthalate to total 100 mol% of the acid component is preferably 40 to 85 mol%, more preferably 50 to 85 mol%, even more preferably 60 to 85 mol%.

[28] The method according to any one of [20] to [27], wherein the proportion of the polyvalent carboxylic acid component to total 100 mol% of the acid component is preferably 15 to 60 mol%, more preferably 15 to 50 mol%, even more preferably 15 to 40 mol%.

[29] The method according to any one of [20] to [28], wherein the IV value of the polyethylene terephthalate is preferably 0.2 to 1.2, more preferably 0.3 to 1.1, even more preferably 0.4 to 0.6.

[30] The method according to any one of [20] to [29], wherein the mixture contains a divalent carboxylic acid.

[31] The method according to [30], wherein the divalent carboxylic acid is at least one selected from the group consisting of terephthalic acid, isophthalic acid and adipic acid.

[32] The method according to any one of [20] to [31], wherein the mixture contains a dihydric alcohol other than the propylene oxide adduct of bisphenol A (another or other dihydric alcohols).

[33] The method according to [32], wherein the another or other dihydric alcohols is or are at least one of polyoxyethylene-(2.0)-2,2-bis(4-hydroxyphenyl)propane and ethylene glycol.

[34] The method according to any one of [20] to [33], wherein the proportion of the polyethylene terephthalate is preferably 30 to 55 % by mass, more preferably 40 to 55 % by mass, even more preferably 50 to 55 % by mass, relative to the total mass of the mixture.

[35] The method according to any one of [20] to [34], wherein the proportion of the polyvalent carboxylic acid component is preferably 8 to 30 % by mass, more preferably 8 to 25 % by mass, even more preferably 8 to 20 % by mass, relative to the total mass of the mixture.

[36] The method according to any one of [20] to [35], wherein the proportion of the polyhydric alcohol component is preferably 15 to 50 % by mass, more preferably 20 to 45 % by mass, even more preferably 25 to 40 % by mass, relative to the total mass of the mixture.

[37] The method according to any one of [20] to [36], wherein the proportion of the propylene oxide adduct of bisphenol A is preferably 25 to 45 % by mass, more preferably 25 to 40 % by mass, even more preferably 25 to 35 % by mass, relative to the total mass of the mixture.

[38] The method according to any of [20] to [37], wherein the total amount of at least one selected from the group consisting of the tri- or higher valent carboxylic acid and the tri- or higher hydric alcohol is preferably 0.1 % by mass or more, more preferably 0.1 to 5 % by mass, even more preferably 0.2 to 4 % by mass, most preferably 0.4 to 3 % by mass, relative to the total mass of the mixture.

[39] The method according to any one of [20] to [38], wherein the amount of the propylene oxide adduct of bisphenol A is 20 to 32 molar parts, with respect to 100 molar parts of the acid component.

[Advantageous Effects of Invention]

The present invention can provide a polyester resin that enables production of a toner excellent in storability in a high-temperature environment, toner fixability and toner fixation strength, a method for producing the same, and a toner.

The present invention can also provide a polyester resin having excellent bonding strength with particles and fiber materials, and a method for producing the same.

[Description of Embodiments]

[Polyester Resin]

The polyester resin of the first aspect of the present invention is obtained using polyethylene terephthalate (PET), a polyvalent carboxylic acid component, and a polyhydric alcohol component. That is, the polyester resin is a reaction product of the mixture (M), which is obtained by using the mixture (M) containing PET, a polyvalent carboxylic acid component, and a polyhydric alcohol component as a raw material.

<Polyethylene terephthalate>

The PET to be used may be, for example, any of those produced according to conventional methods by way of esterification, transesterification or polycondensation of ethylene glycol with terephthalic acid, dimethyl terephthalate, etc.

The PET to be used may be unused PET, or recycled PET obtained by regenerating (recycling) used PET or PET products. Further, the PCT to be used may be PET using a plant-derived raw material, A-PET (amorphous polyethylene terephthalate), C-PET (crystalline polyethylene terephthalate), or G-PET (glycol-modified polyethylene terephthalate).

The recycled PET to be used may be in the form of pellets processed from used PET, or pulverized products obtained from products such as films and bottles, or remnants thereof.

Examples of PET using plant-derived raw materials include PET in which at least one of the ethylene glycol and the terephthalic acid is plant-derived. Whether or not PET uses plant-derived raw materials can be verified by, for example, ASTM D6866 "Standard Test Methods for Determining the Biobased Content Using Radiocarbon (C14) Analysis".

From the perspective of environmental conservation, recycled PET and PET using plant-derived raw materials are preferable as PET. PET using a plant-derived raw material may be an unused one or a used one.

With respect to the PET, a single type thereof may be used individually or two or more types thereof may be used in combination.

The IV value of PET that can be used in the present invention is preferably 0.2 to 1.2, more preferably 0.3 to 1.1, even more preferably 0.4 to 0.6, from the viewpoint of controlling the crystallinity of the resulting polyester resin. When the IV value of PET is not less than the lower limit value described above, the heat absorption by the polyester resin in a heat treatment thereof can be easily controlled to 10 J/g or less, as described later in detail. When the IV value of PET is not more than the upper limit value described above, it becomes easier to control the heat absorption to 0.1 J/g or more.

The IV value of PET is the intrinsic viscosity and serves as an indicator of the weight average molecular weight of PET. The IV value and weight average molecular weight of PET can be adjusted by the polycondensation time and the like.

The IV value of PET is a value obtained by dissolving 0.3 g of PET in 30 mL of a mixed solvent prepared by mixing phenol and 1,1,2,2-tetrachloroethane at a mass ratio of 1:1, and measuring the IV value of the resulting solution at 30 °C with an ubbelohde viscometer.

The weight average molecular weight of PET is a value measured by gel permeation chromatography (GPC) with respect to a product obtained by dissolving 0.1 g of PET in 99.9 g of hexafluoro-2-propanol containing 5 mM sodium trifluoroacetate, and filtering the resulting solution through a polytetrafluoroethylene filter with a pore size of 0.45 $\mu$m. Dissolution of PET in hexafluoro-2-propanol is performed at room temperature (20 °C) or 45 °C.

The weight average molecular weight of PET is preferably 1,000 to 30,000, more preferably 2,000 to 25,000, even more preferably 3,000 to 20,000, and particularly preferably 5,000 to 20,000. When the weight average molecular weight of PET is not less than the lower limit value described above, it becomes easier to control the heat absorption by the polyester resin in a heat treatment thereof to 0.1 J/g or more. When the weight average molecular weight of PET is not more than the upper limit value described above, it becomes easier to control the heat absorption to 10 JIg or less.

<Polyvalent carboxylic acid component>

Examples of polyvalent carboxylic acids include divalent carboxylic acids and tri- or higher valent carboxylic acids.

Examples of divalent carboxylic acids include aromatic dicarboxylic acids, such as terephthalic acid, isophthalic acid, isomers of naphthalene dicarboxylic acid (specifically 1,4-, 1,5-, 1,6-, 1,7-, 2,5-, 2,6-, 2,7-, and 2,8-isomers), and lower alkyl esters thereof or acid anhydrides thereof; and aliphatic dicarboxylic acids, such as succinic acid, isodecylsuccinic acid, dodecenylsuccinic acid, maleic acid, fumaric acid, adipic acid, sebacic acid, furandicarboxylic acid, and lower alkyl esters thereof or acid anhydrides thereof.

Examples of lower alkyl esters of terephthalic acid and isophthalic acid include dimethyl terephthalate, dimethyl isophthalate, diethyl terephthalate, diethyl isophthalate, dibutyl terephthalate, and dibutyl isophthalate.

Among these, terephthalic acid, isophthalic acid, and adipic acid are preferable as the divalent carboxylic acid in terms of excellent handling and cost.

With respect to the divalent carboxylic acid, a single type thereof may be used individually or two or more types thereof may be used in combination. The divalent carboxylic acid may also be used in combination with the tri- or higher valent carboxylic acid described later.

Examples of tri- or higher valent carboxylic acids include trimellitic acid, pyromellitic acid, 1,2,4-cyclohexanetricarboxylic acid, 2,5,7-naphthalenetricarboxylic acid, 1,2,4-naphthalenetricarboxylic acid, 1,2,5-hexanetricarboxylic acid, 1,2,7,8-octanetetracarboxylic acid, and acid anhydrides and lower alkyl esters thereof.

Among these, as the tri- or higher valent carboxylic acid, trimellitic acid, trimellitic anhydride, pyromellitic acid and pyromellitic anhydride are preferable, and trimellitic acid and trimellitic anhydride are particularly preferable, in terms of excellent handling and cost.

With respect to the tri- or higher valent carboxylic acid, a single type thereof may be used individually or two or more types thereof may be used in combination.

<Polyhydric alcohol component>

Examples of the polyhydric alcohol component include dihydric alcohols and tri- or higher hydric alcohols.

The dihydric alcohol is preferably a propylene oxide adduct of bisphenol A.

Examples of propylene oxide adducts of bisphenol A include polyoxypropylene-(2.0)-2,2-bis(4-hydroxyphenyl)propane, polyoxypropylene-(2.2)-2,2-bis(4-hydroxyphenyl)propane, polyoxypropylene-(2.3)-2,2-bis(4-hydroxyphenyl)propane, polyoxypropylene-(2.4)-2,2-bis(4-hydroxyphenyl)propane, polyoxypropylene-(3.3)-2,2-bis(4-hydroxyphenyl)propane, and polyoxypropylene (6)-2,2-bis(4-hydroxyphenyl)propane.

Among these, polyoxypropylene-(2.3)-2,2-bis(4-hydroxyphenyl)propane is preferable as the propylene oxide adduct of bi sphenol A in terms of excellent handling and cost.

One of these propylene oxide adducts of bisphenol A may be used alone, or two or more thereof may be used in combination.

The number in parentheses after "propylene" is the average number of moles of added propylene oxide (PO).

As the dihydric alcohol, a dihydric alcohol other than the propylene oxide adduct of bisphenol A (hereinafter also referred to as "another or other dihydric alcohols") may be used.

Examples of another or other dihydric alcohols include aromatic alcohols, such as polyoxyethylene-(2.0)-2,2-bis(4-hydroxyphenyl)propane, polyoxyethylene-(2.2)-2,2-bis(4 -hydroxyphenyl)propane, polyoxyethylene-(2.3)-2,2-bis(4-hydroxyphenyl)propane, polyoxypropylene(2,2)-polyoxyethylene-(2.0)-2,2-bis(4-hydroxyphenyl)propane; and aliphatic alcohols, such as ethylene glycol, neopentyl glycol, propylene glycol, hexanediol, polyethylene glycol, 1,3-propanediol, 1,4-butanediol, diethylene glycol, triethylene glycol, 1,4-cyclohexanedimethanol, D-isosorbide, L-isosorbide, isomannide, erythritan, and 1,4-dihydroxy-2-butene.

Among these, polyoxyethylene-(2.0)-2,2-bis(4-hydroxyphenyl)propane and ethylene glycol are preferable as the another or other dihydric alcohols in terms of excellent handling performance and cost.

With respect to the another or other dihydric alcohols, a single type thereof may be used individually or two or more types thereof may be used in combination.

The number in parentheses after "ethylene" is the average number of moles of added ethylene oxide (EO), and the number in parentheses after "propylene" is the average number of moles of added propylene oxide (PO).

Trimethylolpropane is preferable as the tri- or higher hydric alcohol.

As the tri- or higher hydric alcohol, a tri- or higher hydric alcohol other than trimethylolpropane (hereinafter also referred to as "another or other tri- or higher hydric alcohols") may be used as well.

Examples of another or other tri- or higher hydric alcohols include sorbitol, 1,4-sorbitan, pentaerythritol, dipentaerythritol, tripentaerythritol, 1,2,4-butanetriol, 1,2,5-pentanetriol, glycerol, 2-methyl-1,2,3-propanetriol, 2-methyl-1,2,4-butanetriol, 1,3,5-trihydroxymethylbenzene, and glycerin.

With respect to the another or other tri- or higher hydric alcohols, a single type thereof may be used individually or two or more types thereof may be used in combination.

<Other components>

The mixture (M) may contain components other than PET, the polyvalent carboxylic acid component and the polyhydric alcohol component (another or other components). That is, the polyester resin may contain structural units derived from another or other components.

Examples of another or other components include monovalent carboxylic acids, monovalent alcohols, and the like.

Examples of monovalent carboxylic acids include aromatic carboxylic acids having 30 or less carbon atoms, such as benzoic acid and p-methylbenzoic acid; aliphatic carboxylic acids having 30 or less carbon atoms, such as stearic acid and behenic acid; and unsaturated carboxylic acids having one or more double bonds in the molecules thereof, such as cinnamic acid, oleic acid, linoleic acid and linolenic acid.

Examples of monohydric alcohols include aromatic alcohols having 30 or less carbon atoms, such as benzyl alcohol; and aliphatic alcohols having 30 or less carbon atoms, such as oleyl alcohol, lauryl alcohol, cetyl alcohol, stearyl alcohol and behenyl alcohol.

The mixture (M) preferably includes PET and at least one selected from the group consisting of tri- or higher valent carboxylic acids and tri- or higher hydric alcohols (hereinafter collectively referred to as "tri- or higher valent component"), and more preferably includes PET, a tri- or higher valent component, a divalent carboxylic acid, and optionally a divalent alcohol.

Specifically, the mixture (M) preferably includes the following (i), (ii) and (iii), and more preferably includes the following (i), (ii), (iii) and (iv), and optionally the following (v). That is, the polyester resin preferably includes a structural unit derived from the following (ii) and a structural unit derived from the following (iii), and more preferably includes a structural unit derived from the following (ii) and a structural unit derived from the following (iii), a structural unit derived from the following (iv), and optionally a structural unit derived from the following (v).

(i): PET
(ii): at least one selected from the group consisting of trimellitic acid, trimellitic anhydride and trimethylolpropane
(iii): propylene oxide adduct of bisphenol A
(iv): at least one selected from the group consisting of terephthalic acid, isophthalic acid and adipic acid
(v): at least one of polyoxyethylene-(2.0)-2,2-bis(4-hydroxyphenyl)propane and ethylene glycol

<Amount>

The amount of the PET in the mixture (M) is preferably 30 to 55 % by mass, more preferably 40 to 55 % by mass, even more preferably 50 to 55 % by mass, based on the total mass of the mixture (M), in terms of controlling the crystallinity of the resulting polyester resin. When the amount of the PET is not less than the lower limit value described above, it becomes easier to control the heat absorption by the polyester resin in a heat treatment thereof to 0.1 J/g or more. When the amount of the PET is not more than the upper limit value described above, it becomes easier to control the heat absorption to 10 J/g or less.

The proportion of the PET-derived acid component is preferably 40 to 85 mol%, more preferably 50 to 85 mol%, even more preferably 60 to 85 mol%, with respect to the total 100 mol% of the acid component. When the proportion of the PET-derived acid component is not less than the lower limit value described above, it becomes easier to control the heat absorption by the polyester resin in a heat treatment thereof to 0.1 J/g or more. When the proportion of the PET-derived acid component is not more than the upper limit value described above, it becomes easier to control the heat absorption to 10 J/g or less.

In this context, the "acid component" means all acid components contained in the mixture (M). The acid component encompasses PET-derived acid components (e.g., terephthalic acid, dimethyl terephthalate, etc.), polyvalent carboxylic acid components, and monovalent carboxylic acids described later.

The amount of the polycarboxylic acid component in the mixture (M) is preferably 8 to 30 % by mass, more preferably 8 to 25 % by mass, even more preferably 8 to 20% by mass, based on the total mass of the mixture (M). When the amount of the polycarboxylic acid component is not less than the lower limit value described above, the heat absorption by the polyester resin in a heat treatment thereof can be easily controlled to 10 Jlg or less. When the amount of the polycarboxylic acid component is not more than the upper limit value described above, it becomes easier to control the heat absorption to 0.1 J/g or more.

The proportion of the polycarboxylic acid component is preferably 15 to 60 mol%, more preferably 15 to 50 mol%, even more preferably 15 to 40 mol%, with respect to the total 100 mol% of the acid component. When the proportion of the polycarboxylic acid component is not less than the lower limit value described above, the heat absorption by the polyester resin in a heat treatment thereof can be easily controlled to 10 J/g or less. When the proportion of the polycarboxylic acid component is not more than the upper limit value described above, it becomes easier to control the heat absorption to 0.1 J/g or more.

The amount of the polyhydric alcohol component in the mixture (M) is preferably 15 to 50 % by mass, more preferably 20 to 45 % by mass, even more preferably 25 to 40% by mass, based on the total mass of the mixture (M). When the amount of the polyhydric alcohol component is not less than the lower limit value described above, the heat absorption by the polyester resin in a heat treatment thereof can be easily controlled to 10 J/g or less. When the amount of the polyhydric alcohol component is not more than the upper limit value described above, it becomes easier to control the heat absorption to 0.1 J/g or more.

The amount of the tri- or higher valent component in the mixture (M) is 1 molar part or more, preferably 1 to 5 molar parts, more preferably 1 to 4 molar parts, even more preferably 1 to 3 molar parts, most preferably 1.5 to 3 molar parts, with respect to 100 molar parts of the acid component.

Further, the amount of the tri- or higher valent component in the mixture (M) is preferably 0.1 % by mass or more, more preferably 0.1 to 5 % by mass, even more preferably 0.2 to 4 % by weight, most preferably 0.4 to 3 % by weight, based on the total mass of the mixture (M).

When the amount of the tri- or higher valent component is not less than the lower limit value described above, the reactivity improves and the discoloration of the polyester resin can be suppressed. In addition, a toner containing the polyester resin improves in terms of toner fixability. When the amount of the tri- or higher valent component is not more than the upper limit value described above, a toner containing the polyester resin improves further in terms of storability in a high-temperature environment. In addition, gel formation in the polyester resin can be suppressed.

Furthermore, when the amount of the tri- or higher valent component is within the above range, it becomes easier to control the heat absorption by the polyester resin in a heat treatment thereof to 0.1 to 10 J/g.

The amount of the at least one type of structural unit selected from the group consisting of a structural unit derived from a tri- or higher valent carboxylic acid and a structural unit derived from a tri- or higher hydric alcohol in the polyester resin (hereinafter, also collectively referred to as "tri- or higher valent component-derived structural unit") is 1 molar part or more, preferably 1 to 5 molar parts, more preferably 1 to 4 molar parts, even more preferably 1 to 3 molar parts, most preferably 1.5 to 3 molar parts, with respect to 100 molar parts of structural units derived from the acid component. When the amount of the tri- or higher valent component-derived structural unit is not less than the lower limit value described above, the reactivity improves, and the discoloration of the polyester resin can be suppressed. In addition, a toner containing the polyester resin improves in terms of toner fixability. When the amount of the tri- or higher valent component-derived structural unit is not more than the upper limit value described above, a toner containing the polyester resin improves further in terms of storability in a high-temperature environment. In addition, gel formation in the polyester resin can be suppressed. Further, the amount of the tri- or higher valent component-derived structural unit has a great influence over the crystal formation of the resulting polyester resin, and when this amount is within the above range, it becomes easier to control the heat absorption by the polyester resin in a heat treatment thereof to 0.1 to 10 J/g.

The amount of the propylene oxide adduct of bisphenol A in the mixture (M) is preferably 18 to 35 molar parts, more preferably 20 to 32 molar parts, with respect to 100 molar parts of the acid component.

Also, the amount of the propylene oxide adduct of bisphenol A in the mixture (M) is preferably 25 to 45 % by mass, more preferably 25 to 40 % by mass, even more preferably 25 to 35 % by mass, based on the total mass of the mixture (M).

When the amount of the propylene oxide adduct of bisphenol A is not less than the lower limit value described above, the heat absorption by the polyester resin in a heat treatment thereof can be easily controlled to 10 J/g or less. When the amount of the propylene oxide adduct of bisphenol A is not more than the upper limit value described above, it becomes easier to control the heat absorption to 0.1 J/g or more.

The amount of the structural unit derived from the propylene oxide adduct of bisphenol A in the polyester resin is preferably 18 to 35 molar parts, more preferably 20 to 32 molar parts, with respect to 100 molar parts of the structural units derived from the acid component. When the amount of the structural unit derived from the propylene oxide adduct of bisphenol A is not less than the lower limit value described above, the heat absorption by the polyester resin in a heat treatment thereof can be easily controlled to 10 J/g or less. When the amount of the structural unit derived from the propylene oxide adduct of bisphenol A is not more than the upper limit value described above, it becomes easier to control the heat absorption to 0.1 J/g or more.

<Properties>

The polyester resin of the present embodiment is characterized in that the heat absorption (Hm) is 0.1 to 10 J/g as measured with respect to the polyester resin heat-treated at 150 °C for 30 minutes. The heat absorption being 0.1 to 10 J/g as a result of the heat treatment means that the polyester resin has a partially crystalline structure. The heat absorption is preferably 0.1 to 7 J/g, more preferably 0.2 to 5 J/g, even more preferably 0.2 to 2.5 J/g.

When the heat absorption is not less than the lower limit value described above, the toner containing the polyester resin improves in terms of the storability in a high-temperature environment and the toner fixation strength. Further, the bonding strength with particles and fibrous materials also improve. When the heat absorption is not more than the upper limit value described above, the toner fixability improves.

The heat absorption is determined as follows. That is, after heat-treating the polyester resin at 150 °C for 30 minutes, the heat absorption is read from the chart obtained by measurement carried out using a differential scanning calorimeter while raising the temperature from room temperature to 300 °C at a heating rate of 20 °C/min.

The glass transition temperature (Tg) of the polyester resin is preferably 65 °C or higher, more preferably 65 to 80 °C, even more preferably 70 to 75 °C from the viewpoint of toner storability. When the glass transition temperature of the polyester resin is not lower than the lower limit value described above, a toner containing the polyester resin improves further in terms of storability in a high-temperature environment. When the glass transition temperature of the polyester resin is not higher than the upper limit value described above, the toner fixability, especially the low-temperature toner fixability, improves further.

The glass transition temperature of the polyester resin is determined as follows. That is, using a differential scanning calorimeter, the temperature at the intersection between the baseline on the low temperature side of the chart resulting from a measurement implemented at a heating rate of 5 °C/min and the tangent line of the endothermic curve near the glass transition temperature is determined, and this temperature is taken as the glass transition temperature.

The softening temperature (T4) of the polyester resin is preferably 110 to 150 °C, more preferably 110 to 140 °C. When the softening temperature of the polyester resin is not lower than the lower limit value described above, the above-mentioned heat absorption can be easily controlled to 10 J/g or less. When the softening temperature of the polyester resin is not higher than the upper limit value described above, a toner containing the polyester resin improves further in terms of toner fixability. In addition, it becomes easier to control the heat absorption to 0.1 J/g or more.

The softening temperature of the polyester resin is determined as follows. That is, the measurement is carried out using a flow tester with a nozzle of 1 mm$\varphi \times$ 10 mm, a load of 294 N (30 kgf) and a constant heating rate of 3 °C/min, and a temperature at which 112 of the resin sample (1.0 g) flowed out is measured, which is taken as the softening temperature.

The acid value (AV) of the polyester resin is preferably 10 to 40 mgKOH/g, more preferably 10 to 30 mgKOH/g. When the acid value of the polyester resin is not less than the lower limit value described above, the productivity of the polyester resin improves. When the acid value of the polyester resin is not more than the upper limit value described above, the moisture resistance of the polyester resin improves, which facilitates the production of a toner that is less susceptible to the operating environment.

The acid value of the polyester resin is the number of milligrams of potassium hydroxide required to neutralize carboxyl groups per 1 g of a sample, and is expressed in the unit of mgKOH/g.

The acid value of the polyester resin is a value obtained by dissolving the polyester resin in benzyl alcohol and subjecting the resulting solution to titration with a 0.02 N KOH solution using cresol red as an indicator.

<Method for producing polyester resin>

An example of the method for producing the polyester resin according to the second aspect of the present invention is described below.

The method for producing the polyester resin in the present aspect includes a step of reacting the mixture (M) containing the PET, the polyvalent carboxylic acid component, the polyhydric alcohol component, and, if necessary, another or other components.

The step of reacting the mixture (M) preferably includes at least one of an esterification reaction and a transesterification reaction.

Further, it is preferable to carry out a polycondensation reaction after the step of reacting the mixture (M).

Specifically, the mixture (M), a catalyst, etc. are put into a reaction vessel, and heated to raise the temperature to carry out at least one of an esterification reaction and a transesterification reaction, while removing water or alcohol produced by the reaction. This is followed by implementation of the polycondensation reaction. In this process, a polyester resin can be produced by gradually reducing the pressure inside the reactor so as to implement the condensation under a pressure of 150 mmHg (20 kPa) or less, preferably 15 mmHg (2 kPa) or less, while distilling off the polyhydric alcohol component.

The mixture (M) preferably contains at least one selected from the group consisting of trimellitic acid, trimellitic anhydride and trimethylolpropane as the tri- or higher valent component, and more preferably further contains a propylene oxide adduct of bisphenol A as the dihydric alcohol.

The catalyst used in the esterification reaction, the transesterification reaction, and the polycondensation reaction is not particularly limited, and examples thereof include titanium compounds, such as titanium alkoxide compounds having alkoxy groups, titanium carboxylates, titanyl carboxylates, titanyl carboxylate salts, and titanium chelate compounds; organic tins, such as dibutyltin oxide; and inorganic tins, such as tin oxide and 2-ethylhexanetin. In addition to the catalysts listed above, calcium acetate, calcium acetate hydrate, zinc acetate, antimony trioxide, germanium dioxide, and the like may also be used.

Examples of titanium alkoxide compounds having an alkoxy group include tetramethoxytitanium, tetraethoxytitanium, tetrapropoxytitanium, tetrabutoxytitanium, tetrapentoxytitanium, and tetraoctoxytitanium.

Examples of titanium carboxylate compounds include titanium formate, titanium acetate, titanium propionate, titanium octanoate, titanium oxalate, titanium succinate, titanium maleate, titanium adipate, titanium sebacate, titanium hexanetricarboxylate, titanium isooctanetricarboxylate, titanium octanetetracarboxylate, titanium decanetetracarboxylate, titanium benzoate, titanium phthalate, titanium terephthalate, titanium isophthalate, titanium 1,3-naphthalenedicarboxylate, titanium 4,4-biphenyldicarboxylate, titanium 2,5-toluenedicarboxylate, titanium anthracene dicarboxylate, titanium trimellitate, titanium 2,4,6-naphthalenetricarboxylate, titanium pyromellitate, and titanium 2,3,4,6-naphthalenetetracarboxylate.

Among these, as the catalyst, titanium compounds are preferable, and tetrabutoxytitanium is particularly preferable, since a polyester resin with a reduced total amount of volatile organic compounds (TVOC: Total Volatile Organic Compound) is easily obtained.

With respect to the catalyst, a single type thereof may be used individually or two or more types thereof may be used in combination.

The polymerization temperature during the esterification reaction, transesterification reaction, and polycondensation reaction is preferably 180 to 280 °C, more preferably 200 to 270 °C. When the polymerization temperature is not lower than the lower limit value described above, the productivity of the polyester resin improves. When the polymerization temperature is not higher than the upper limit value described above, decomposition of the polyester resin and by-production of volatile matter that causes odor can be suppressed, and the TVOC can be reduced.

The polymerization endpoint is determined, for example, by the softening temperature of the polyester resin. For example, the polymerization may be terminated after the polycondensation reaction is performed until the torque of the stirring blade reaches a value indicating the desired softening temperature. In this context, "to terminate the polymerization" means to stop agitation of the reaction vessel and introduce nitrogen into the interior of the reaction vessel to set the pressure inside the reaction vessel to normal pressure.

If necessary, the polyester resin obtained after cooling may be pulverized to a desired size.

<Technical effects>

The polyester resin of the first aspect of the present invention described above contains a specific amount of the tri- or higher valent component-derived structural unit, and has a heat absorption of 0.1 to 10 J/g as measured with respect to the polyester resin heat-treated at 150 °C for 30 minutes, which enables production of a toner excellent in storability in a high-temperature environment, toner fixability and toner fixation strength.

Further, the polyester resin of the first aspect of the present invention uses PET as a part of raw materials. Since PET already contains structural units derived from ethylene glycol, the polyester resin of the first aspect of the present invention can reduce the amount of ethylene glycol used as a raw material monomer. Ethylene glycol is a VOC, and if unreacted ethylene glycol remains in the polyester resin, the ethylene glycol volatilizes when the toner containing this polyester resin is heated, thereby causing odors and contamination inside a printer.

However, with the polyester resin of the first aspect of the present invention, the amount of ethylene glycol used can be reduced, so that TVOC can be reduced, and odor and contamination inside a printer can be suppressed.

Furthermore, since ethylene glycol generally does not remain as a monomer in PET, PET-derived VOCs are unlikely to occur.

The polyester resin of the first aspect of the present invention is suitable as a binder resin for toners.

Moreover, the polyester resin of the first aspect of the present invention is excellent in bonding strength with particles and fiber materials, and is therefore suitable as a binder resin for binding particles and fiber materials.

For example, the polyester resin of the first aspect of the present invention can be used as a binder for binding fibers together. In this instance, the fibers are not particularly limited, and examples thereof include natural fibers (e.g., animal fibers, and plant fibers), chemical fibers (e.g., organic fibers, inorganic fibers, and organic-inorganic composite fibers), etc. More specific examples include fibers formed of cellulose, silk, wool, cotton, hemp, kenaf, flax, ramie, jute, Manila hemp, sisal hemp, softwood, and hardwood; fibers formed of rayon, lyocell, cupra, vinylon, acrylic fibers, nylon, aramid, polyester, polyethylene, polypropylene, polyurethane, polyimide, carbon, glass, and metals; and recycled fibers obtained from waste paper, waste cloth, etc. One type of these fibers may be used alone, or two or more types of them may be used in the form of a mixture thereof. Further, the fibers may be used after having been subjected to purification treatment. Also, the fibers may be dried, or may contain or be impregnated with a liquid such as water or an organic solvent.

The method for producing a polyester resin according to the second aspect of the present invention enables easily production a polyester resin that can provide a toner excellent in storability in a high-temperature environment, toner fixability and toner fixation strength.

Further, the method for producing a polyester resin according to the second aspect of the invention enables easy production of a polyester resin having excellent bonding strength with particles and fiber materials.

Furthermore, since PET is used as a part of the raw material of the polyester resin, the PET serves as a starting point and facilitates the esterification reaction and the transesterification reaction, so that the reaction time can be shortened.

[Toner]

The toner of the third aspect of the invention contains the polyester resin of the first aspect of the invention described above.

The amount of the polyester resin of the first aspect of the present invention is preferably 20 to 90 % by mass, based on the total mass of the toner.

The toner of the third aspect of the present invention may optionally contain a blend of a colorant, a charge control agent, a wax, a flow modifier, a magnetic material, a resin other than the polyester resin of the first aspect of the present invention (another or other binder resins), etc.

Examples of colorants include carbon black, nigrosine, aniline blue, phthalocyanine blue, phthalocyanine green, hansa yellow, rhodamine dyes and pigments, chrome yellow, quinacridone, benzidine yellow, rose bengal, triallylmethane dyes, monoazo dyes or pigments, and disazo dyes or pigments, condensed azo dyes or pigments.

When the toner is used as a color toner, examples of yellow colorants include benzidine yellow, monoazo dyes and pigments, condensed azo dyes and pigments, examples of magenta colorants include quinacridone, rhodamine dyes and pigments, monoazo dyes and pigments, and examples of cyan colorants include phthalocyanine blue.

One of these colorants may be used alone, or two or more of these may be used in combination.

The amount of the colorant is not particularly limited, but is preferably 2 to 10 % by mass, based on the total mass of the toner, in terms of obtaining a toner excellent in color tone, image density and thermal properties.

Examples of charge control agents include positive charge control agents, such as quaternary ammonium salts, and basic or electron-donating organic substances; and negative charge control agents, such as metal chelates, metal-containing dyes, acidic or electron-withdrawing organic substances.

When the toner is used as a color toner, suitable charge control agents are those which are colorless or light-colored and cause less color tone disturbance to the toner. Examples of such charge control agents include metal salts of salicylic acid or alkyl salicylic acid with chromium, zinc, aluminum, etc., metal complexes, amide compounds, phenol compounds, naphthol compounds, and the like. Furthermore, styrene-based vinyl polymers, acrylic acid-based vinyl polymers, methacrylic acid-based vinyl polymers, and vinyl polymers having a sulfonic acid group are also usable as the charge control agent.

With respect to the charge control agent, a single type thereof may be used individually or two or more types thereof may be used in combination.

The amount of the charge control agent is preferably 0.5 to 5 % by mass, based on the total mass of the toner. When the amount of the charge control agent is not less than the lower limit value described above, the charge of the toner tends to be at a sufficient level. When the amount of the charge control agent is not more than the upper limit value described above, the decrease in charge due to agglomeration of the charge control agent tends to be suppressed.

Examples of waxes include carnauba wax, rice wax, beeswax, polypropylene wax, polyethylene wax, synthetic ester wax, paraffin wax, fatty acid amide, silicone wax, etc., from which a suitable one may be selected and used in consideration of releasability, storage stability, toner fixability, color development, etc. of the toner.

One of these waxes may be used alone, or two or more of these may be used in combination.

The melting point of the wax may be appropriately set in consideration of the toner performance.

The amount of the wax is not particularly limited, but is preferably 0.3 to 15 % by mass, more preferably 1 to 13 % by mass, even more preferably 2 to 12 % by mass, because the amount of the wax affects the toner performance described above.

In addition, since the polyester resin of the first aspect of the present invention has extremely good compatibility with wax, it is possible to increase the type and amount of wax that can be blended, so that a high-performance toner can be provided which is superior to conventional ones in terms of toner fixability, offset resistance and storability.

Examples of flow modifiers include flow improvers, such as fine powders of silica, alumina, titania, etc.; inorganic fine powders of magnetite, ferrite, cerium oxide, strontium titanate, conductive titania, etc.; resistance modifiers, such as styrene resins and acrylic resins; and lubricants, which are used as internal or external additives.

With respect to the flow modifiers, a single type thereof may be used individually or two or more types thereof may be used in combination.

The amount of the flow modifier is preferably 0.05 to 10 % by weight, based on the total mass of the toner. When the amount of the flow modifier is not less than the lower limit value described above, a sufficient effect of improving the performance of the toner tends to be achieved. When the amount of the flow modifier is not more than the upper limit value described above, the image stability of the toner tends to improve.

Examples of another or other binder resins include polyester resins other than the polyester resin of the first aspect of the present invention (another or other polyester resins), styrene resins, cyclic olefin resins, epoxy resins, and the like.

With respect to the another or other binder resins, a single type thereof may be used individually or two or more types thereof may be used in combination.

When the toner contains the another or other binder resins, it is preferable to use the polyester resin of the first aspect of the present invention in an amount of 20 % by mass or more, based on the total mass of all binder resins contained in the toner.

The toner of the third aspect of the present invention can also be used as any of the following developers: a magnetic single-component developer, a non-magnetic single-component developer, and a two-component developer.

When the toner is used as a magnetic single-component developer, the toner contains a magnetic material.

Examples of magnetic materials include ferromagnetic alloys containing ferrite, magnetite, iron, cobalt, nickel, etc.; and alloys that do not contain compounds of ferromagnetic elements but show ferromagnetism when appropriately heat-treated (for example: so-called Heusler alloys containing manganese and copper, such as manganese-copper-aluminum, manganese-copper-tin, etc.; and chromium dioxide).

With respect to the magnetic material, a single type thereof may be used individually or two or more types thereof may be used in combination.

The amount of the magnetic material is not particularly limited, but is preferably 3 to 70 % by mass, more preferably 3 to 60 % by mass, even more preferably 3 to 50 % by mass, based on the total mass of the toner, because this amount greatly affects the grindability of the toner. When the amount of the magnetic material is not less than the lower limit value described above, the charge of the toner tends to be at a sufficient level. When the amount of the magnetic material is not more than the upper limit value described above, the toner fixability and grindability of the toner tend to improve.

When the toner is used as a two-component developer, the toner is used in combination with a carrier.

Examples of carriers include magnetic substances, such as iron powder, magnetite powder, and ferrite powder, coated products thereof having a resin coating on their surfaces, and magnetic carriers. Examples of coating resins for resin-coated carriers include styrene resins, acrylic resins, styrene-acrylic copolymer resins, silicone resins, modified silicone resins, fluorine resins, and mixtures of these resins.

One of these carriers may be used alone, or two or more of these may be used in combination.

The amount of the carrier used is preferably 500 to 3000 parts by mass, with respect to 100 parts by mass of toner. When the amount of the carrier used is not less than the lower limit value described above, fogging tends to be less likely to occur. When the amount of the carrier used is not more than the upper limit value described above, the density of the fixed image tends to become sufficient.

The method for producing the toner is not particularly limited, and examples thereof include a method in which the polyester resin of the first aspect of the present invention is mixed with the above-described blend, and the resulting mixture is subjected to melt-kneading with a twin-screw extruder or the like, coarse pulverization, fine pulverization and classification, which is optionally followed by external addition treatment with inorganic particles, etc. (pulverization method); and a method in which the polyester resin of the first aspect of the present invention and the blend are dissolved and dispersed in a solvent, and then granulated in an aqueous medium, followed by removing the solvent, and the resulting is washed and dried to obtain toner particles, which are optionally subjected to external addition treatment with inorganic particles, etc., or a method in which the polyester resin of the first aspect of the present invention is emulsified in water, aggregated and fused together, in water, with fine particles of the blend to obtain granules, and the granules are washed and dried to obtain toner particles, which are optionally subjected to external addition treatment with inorganic particles, etc. (chemical method).

The average particle size of the toner is not particularly limited, but is preferably 3 to 15 μm, more preferably 5 to 10 μm. When the average particle size of the toner is not less than the lower limit value described above, the productivity improves and the problem of pneumoconiosis is less likely to occur. When the average particle size of the toner is not more than the upper limit value described above, high-quality images can be stably formed.

The toner of the third aspect of the present invention contains the polyester resin of the first aspect of the present invention described above, and is therefore excellent in storability in a high-temperature environment, toner fixability and toner fixation strength.

[Examples]

Hereinbelow, the present invention is described in detail with reference to examples. However, the present invention is in no way limited by these examples.

The measurement and evaluation methods for the polyester resin and toner shown in these examples are as follows.

[Measurement and evaluation methods]

<Measurement of glass transition temperature (Tg)>

Using a differential scanning calorimeter ("DSC-60" manufactured by Shimadzu Corporation), the glass transition temperature of the polyester resin was measured from the intersection between the baseline in a chart resulting from a measurement implemented at a heating rate of 5 °C/min and the tangent line of the endothermic curve. The sample used was prepared by weighing out 10 mg ± 0.5 mg of the polyester resin into an aluminum pan, which was then melted at 100 °C (i.e., a temperature above the glass transition temperature) for 10 minutes, followed by rapidly cooling over dry ice.

<Measurement of softening temperature (T4)>

Using a flow tester ("CFT-500D" manufactured by Shimadzu Corporation) with a nozzle of 1 mmφ × 10 mm, a load of 294 N, and a constant heating rate of 3 °C/min, a temperature at which 112 of the resin sample (1.0 g) flowed out was measured and taken as the softening temperature.

<Measurement of acid value (AV)>

The acid value of the polyester resin was measured as follows.

About 0.2 g of a measurement sample was precisely weighed (a (g)) in a side-arm Erlenmeyer flask, 20 mL of benzyl alcohol was added thereto, and the measurement sample was dissolved by heating with a heater at 230 °C for 15 minutes under a nitrogen atmosphere. The resulting was left to cool to room temperature, followed by addition of 20 mL of chloroform and several drops of cresol red solution, and subjected to titration with 0.02N KOH solution (titration = b (mL), titer of KOH solution = p). A blank measurement was likewise performed (titration = c (mL)), and the acid value was calculated according to the following formula.

$$\text{Acid value (mgKOH/g)} = \{(b\text{-}c) \times 0.02 \times 56.11 \times p\}/a$$

<Measurement of heat absorption (Hm)>

The heat absorption by the polyester resin was measured as follows.

A measurement sample was placed in an aluminum dish and heat-treated in an oven set at 150 °C for 30 minutes.
After left to cool, 10 mg ± 0.5 mg of the measurement sample was weighed out in an aluminum pan, and the measurement was performed using a differential scanning calorimeter ("DSC-60" manufactured by Shimadzu Corporation) while raising the temperature from room temperature (20 °C) to 300 °C at a rate of 20 °C/min, to read the heat absorption by the polyester resin from the obtained chart.

<Evaluation of toner fixability>

Using a rotational rheometer ("AR-2000ex" manufactured by TA Instruments), the storage elastic modulus (G') of the toner was measured under the following conditions.

- Geometry: 25 mmφ parallel plate
- Sample thickness: 1 mm
- Frequency: 1 Hz
- Strain: 1 %
- Measurement temperature: 90 °C to 240 °C (heating rate 3 °C/min)

The storage elastic modulus (G') shows a good correlation with toner fixability. The toner fixability was evaluated according to the following criteria, using the temperature at which the storage elastic modulus (G') becomes $10^4$ Pa as an index of the toner fixation. A lower value of this temperature indicates superior toner fixability.

S: The temperature at which the storage elastic modulus (G') becomes $10^4$ Pa is 160 °C or lower.
A: The temperature at which the storage elastic modulus (G') becomes $10^4$ Pa is above 160 °C and 175 °C or lower.
B: The temperature at which the storage elastic modulus (G') becomes $10^4$ Pa is above 175 °C.

<Evaluation of Storability>

The toner was coarsely pulverized, and the coarsely pulverized toner was sieved to collect toner particles that had passed through a 22 mesh sieve (mesh opening 710 μm) but had not passed through a 30 mesh sieve (mesh opening 500 μm). 2 g of the collected toner particles were weighed out in an aluminum dish, held in a drier at 70 °C for 24 hours, and the state of blocking was visually observed to evaluate storability according to the following criteria.

S: Free flowing powder on the whole even when the aluminum dish is slightly shaken.

A: Blocking is observed, but the blocking is gradually loosened when the aluminum dish is shaken.

B: Blocking is observed on the whole and cannot be loosened even by shaking the aluminum dish.

<Evaluation of toner fixation strength>

The toner was pulverized to 500 μm or less. Then, the pulverized toner was interposed between two Teflon (registered trademark) sheets and pressed using a press machine with its temperature set to a value 30 °C higher than the softening temperature of the polyester resin contained in the toner to prepare a laminate with a 30 μm-thick toner thin film interposed between the two Teflon (registered trademark) sheets. Next, one of the Teflon (registered trademark) sheets was peeled off from the laminate, and the resulting was placed on a paper with its toner thin film side facing downward and, in that state, passed through a roller using a fixation tester with variable roller speed/temperature at a roller speed of 7 mm/sec and a roller temperature of 165 °C. After cooling to room temperature (20° C), the other Teflon (registered trademark) sheet was peeled off and the toner film was transferred onto a sheet of paper.

Cellotape (registered trademark) was stuck on the toner thin film, and a weight of 2 kg was slid over the resulting 10 times. Then, a peeling test was performed by slowly peeling off the Cellotape (registered trademark). The density (image density) of the toner thin film was measured before and after the peeling test with a Macbeth densitometer, and the residual ratio of image density was calculated according to the following formula.

$$\text{Residual ratio (\%)} = (\text{image density after peeling test/image density before peeling test}) \times 100$$

The toner fixation strength was evaluated according to the following criteria, based on the residual ratio of image density. A higher residual ratio indicates a superior toner fixation strength.

S: The retention ratio is 95 % or more, and the toner fixation strength is good.
A: The residual ratio is 90 % or more and less than 95 %, and the toner fixation strength meets the requirement for practical use.
B: The residual ratio is less than 90 % or cracks are observed in the toner thin film when the other Teflon (registered trademark) sheet is peeled off from the paper, and the toner fixation strength is poor.

[Example 1]

<Production of polyester resin>

72 molar parts of recycled PET having an IV value of 0.57, 27.9 molar parts of terephthalic acid, 0.1 molar part of adipic acid, 24 molar parts of polyoxypropylene-(2.3)-2,2-bis(4-hydroxyphenyl)propane, and 2 molar parts of trimethylolpropane, each with respect to 100 molar parts of an acid component, were charged together with 500 ppm of tetrabutoxytitanium as a catalyst, based on the amount of the acid component, into a reaction vessel equipped with a distillation column.

Regarding PET, 1 mol of PET is defined as a unit composed of 1 mol of terephthalic acid and 1 mol of ethylene glycol, and the PET constituent terephthalic acid per 1 mol of PET is counted as 1 mol of an acid component, while the PET constituent ethylene glycol per 1 mol of PET is counted as 1 mol of an alcohol component.

Next, while keeping the rotation speed of the stirring blade in the reaction vessel at 200 rpm, the temperature increase was initiated and heating was implemented so as to set the temperature inside the reaction system to 265 °C. The esterification reaction was carried out while maintaining this temperature. The esterification reaction was terminated when water ceased to distill off from the reaction system. At the end of the esterification reaction, a small amount of the contents of the reaction vessel was sampled, and an endothermic peak attributable to PET was checked using the same differential scanning calorimeter as used for the Tg measurement to find that no endothermic peak attributable to PET was detectable.

Then, the temperature in the reaction system was lowered and maintained at 255 °C, and the pressure in the reaction vessel was reduced over about 20 minutes to a vacuum of 133 Pa. With these conditions, a polycondensation reaction was carried out while distilling off the polyhydric alcohol from the reaction system. The viscosity of the reaction system increased as the reaction proceeded, and the degree of vacuum was increased as the viscosity increased. The condensation reaction was carried out until the torque of the stirring blade reached a value indicating the desired softening temperature. Then, when a predetermined torque was shown, stirring was stopped, and the reaction system was returned to normal pressure and was pressurized with nitrogen to take out the reaction product from the reaction vessel, thereby obtaining a polyester resin. Table 1 shows the time taken for the polycondensation reaction (polycondensation reaction time). Regarding the polycondensation reaction time, the starting point and the end point are determined according to the following criteria, and the time between these points is defined as the polycondensation reaction time.

Starting point: Point when the pressure reduction was started after the temperature of the reaction system after completion of the esterification reaction was adjusted to the polycondensation reaction temperature.

Endpoint: Point when stirring was stopped and nitrogen was started to be introduced into the system after having allowed the polycondensation reaction to proceed at a predetermined degree of vacuum until the torque sustained by the stirring blade of the reaction vessel reached a value indicating the desired softening temperature.

The glass transition temperature, softening temperature, acid value and heat absorption of the obtained polyester resin were measured. The results are shown in Table 1.

The polyester resin obtained in Example 1 includes structural units derived from terephthalic acid, structural units derived from adipic acid, structural units derived from polyoxypropylene-(2.3)-2,2-bis(4-hydroxyphenyl)propane, structural units derived from trimethylolpropane, and structural units derived from ethylene glycol, where the ratio of the structural units substantially agrees with the ingredient composition, i.e., proportion of the materials supplied to the reaction system. That is, the polyester resin obtained in Example 1 contained, as the polyhydric alcohol component-derived structural units, 2 molar parts of the structural units derived from trimethylolpropane, 24 molar parts of the structural units derived from polyoxypropylene-(2.3)-2,2-bis(4-hydroxyphenyl)propane, and 72 molar parts of the structural units derived from ethylene glycol, each with respect to 100 molar parts of the structural units derived from the acid component.

<Production of toner>

88.5 parts by mass of the obtained polyester resin, 7.5 parts by mass of a magenta masterbatch, 1 part by mass of a charge control agent ("LR147" manufactured by Japan Carlit Co., Ltd.), and 3 parts by mass of carnauba wax (manufactured by Toyo ADL Corporation) were weighed out in a plastic bag, dry-blended, and then kneaded with a twin-screw extruder set at 120 ° C to obtain clusters of toner.

The magenta masterbatch used was a mixture of a magenta colorant (P. R. 122) and a polyester resin ("ER-561" manufactured by Mitsubishi Chemical Co., Ltd.) with a mass ratio of colorant :polyester resin = 40 : 60.

The obtained toner was evaluated for toner fixability, storability and toner fixation strength. The results are shown in Table 1.

[Examples 2 to 14, Comparative Examples 1 to 3]

<Production of polyester resin>

A polyester resin was produced in the same manner as in Example 1, except that the ingredient composition was changed to those shown in Tables 1 to 3, and various measurements and evaluations were performed. The results are shown in Tables 1 to 3.

<Production of toner>

A toner was produced in the same manner as in Example 1, except that the polyester resin obtained above was used, and various measurements and evaluations were performed. The results are shown in Tables 1 to 3.

In Comparative Example 3, the heat absorption measured with respect to the polyester resin heat-treated at 150 °C for 30 minutes was large, and the softening temperature was as high as 197.5 °C. Therefore, evaluation of toner properties was omitted.

[Table 1]

|  |  |  | Example | | | | | | |
|---|---|---|---|---|---|---|---|---|---|
|  |  |  | 1 | 2 | 3 | 4 | 5 | 6 | 7 |
| Ingredient composition [molar parts] |  | TPA | 27.9 | 27.9 | 27.9 | 27.9 | 27.9 | 27.9 | 31.9 |
|  |  | IPA |  |  |  |  |  |  |  |
|  |  | ADA | 0.1 | 0.1 | 0.1 | 0.1 | 0.1 | 0.1 | 0.1 |
|  |  | TMA |  |  |  |  |  |  |  |
|  |  | EG |  |  |  |  |  |  |  |
|  |  | BPP | 24 | 24 | 24 | 24 | 25 | 22 | 24 |
|  |  | BPE |  |  |  |  |  |  |  |
|  |  | TMP | 2 | 2 | 2 | 2 | 1 | 4 | 2 |
|  |  | Recycled PET (IV = 0.55, Mw = 8900) |  |  |  |  |  |  |  |
|  |  | Recycled PET (IV = 0.57, Mw = 9300) | 72 | 72 | 72 | 72 | 72 | 72 | 68 |
|  |  | BioPET (IV = 0.86, Mw = 18700) |  |  |  |  |  |  |  |
|  |  | Virgin PET (IV = 0.44, Mw = 6700) |  |  |  |  |  |  |  |
|  |  | Virgin PET (IV = 0.75, Mw = 13100) |  |  |  |  |  |  |  |
|  |  | Virgin PET (IV = 1.08, Mw = unmeasurable) |  |  |  |  |  |  |  |
| Ingredient composition [% by mass] |  | TPA | 16.2 | 16.2 | 16.2 | 16.2 | 16.0 | 16.5 | 18.6 |
|  |  | IPA |  |  |  |  |  |  |  |
|  |  | ADA | 0.05 | 0.05 | 0.05 | 0.05 | 0.05 | 0.05 | 0.05 |
|  |  | TMA |  |  |  |  |  |  |  |
|  |  | EG |  |  |  |  |  |  |  |
|  |  | BPP | 30.1 | 30.1 | 30.1 | 30.1 | 31.1 | 28.0 | 30.3 |
|  |  | BPE |  |  |  |  |  |  |  |
|  |  | TMP | 0.95 | 0.95 | 0.95 | 0.95 | 0.45 | 1.95 | 0.95 |
|  |  | Recycled PET (IV = 0.55, Mw = 8900) |  |  |  |  |  |  |  |
|  |  | Recycled PET (IV = 0.57, Mw = 9300) | 52.7 | 52.7 | 52.7 | 52.7 | 52.4 | 53.5 | 50.1 |
|  |  | BioPET (IV = 0.86, Mw = 18700) |  |  |  |  |  |  |  |
|  |  | Virgin PET (IV = 0.44, Mw = 6700) |  |  |  |  |  |  |  |
|  |  | Virgin PET (IV = 0.75, Mw = 13100) |  |  |  |  |  |  |  |
|  |  | Virgin PET (IV = 1.08, Mw = unmeasurable) |  |  |  |  |  |  |  |
|  |  | Total | 100 | 100 | 100 | 100 | 100 | 100 | 100 |

(continued)

| | | | Example | | | | | | |
|---|---|---|---|---|---|---|---|---|---|
| | | | 1 | 2 | 3 | 4 | 5 | 6 | 7 |
| Catalyst [ppm] | | TBT | 500 | 500 | 500 | 500 | 500 | 500 | 500 |
| Polycondensation reaction time [min] | | | 90 | 80 | 60 | 20 | 100 | 30 | 90 |
| Resin properties | Glass transition temperature [°C] | | 72.0 | 70.2 | 70.8 | 65.2 | 71.3 | 66.1 | 71.2 |
| | Softening temperature [°C] | | 134.9 | 133.7 | 128.0 | 116.5 | 127.7 | 127.7 | 128.1 |
| | Acid value [mgKOH/g] | | 15.5 | 14.2 | 20.1 | 28.7 | 19.5 | 18.1 | 25.9 |
| | Heat absorption [J/g] | | 0.9 | 1.1 | 1.6 | 6.6 | 1.8 | 4.1 | 1.5 |
| Toner properties | Fixation | Temperature [°C] | 173 | 171 | 168 | 152 | 174 | 166 | 168 |
| | | Evaluation | A | A | A | S | A | A | A |
| | Evaluation of storability | | S | S | S | A | S | A | S |
| | Fixation strength | Residual ratio [%] | 91 | 92 | 93 | 98 | 92 | 97 | 93 |
| | | Evaluation | A | A | A | S | A | S | A |

[Table 2]

| | | | Example | | | | | | |
|---|---|---|---|---|---|---|---|---|---|
| | | | 8 | 9 | 10 | 11 | 12 | 13 | 14 |
| Ingredient composition [molar parts] | | TPA | 27.9 | 27.9 | 27.9 | 27.9 | 27.9 | 6 | |
| | | IPA | | | | | | 13 | 13 |
| | | ADA | 0.1 | 0.1 | 0.1 | 0.1 | 0.1 | | |
| | | TMA | | | | | | 2 | 5 |
| | | EG | | | | | | | 2 |
| | | BPP | 24 | 24 | 24 | 24 | 24 | 30 | 30 |
| | | BPE | | | | | | 1 | 1 |
| | | TMP | 2 | 2 | 2 | 2 | 2 | | |
| | Recycled PET (IV = 0.55, Mw = 8900) | | 72 | | | | | | |
| | Recycled PET (IV = 0.57, Mw = 9300) | | | | | | | 79 | 82 |
| | BioPET (IV = 0.86, Mw = 18700) | | | 72 | | | | | |
| | Virgin PET (IV = 0.44, Mw = 6700) | | | | 72 | | | | |
| | Virgin PET (IV = 0.75, Mw = 13100) | | | | | 72 | | | |
| | Virgin PET (IV = 1.08, Mw = unmeasurable) | | | | | | 72 | | |

(continued)

| | | | Example | | | | | | |
|---|---|---|---|---|---|---|---|---|---|
| | | | 8 | 9 | 10 | 11 | 12 | 13 | 14 |
| Ingredient composition [% by mass] | | TPA | 16.2 | 16.2 | 16.2 | 16.2 | 16.2 | 3.2 | |
| | | IPA | | | | | | 6.9 | 6.8 |
| | | ADA | 0.05 | 0.05 | 0.05 | 0.05 | 0.05 | | |
| | | TMA | | | | | | 1.2 | 3.0 |
| | | EG | | | | | | | 0.40 |
| | | BPP | 30.1 | 30.1 | 30.1 | 30.1 | 30.1 | 34.5 | 34.2 |
| | | BPE | | | | | | 1.1 | 1.1 |
| | | TMP | 0.95 | 0.95 | 0.95 | 0.95 | 0.95 | | |
| | | Recycled PET (IV = 0.55, Mw = 8900) | 52.7 | | | | | | |
| | | Recycled PET (IV = 0.57, Mw = 9300) | | | | | | 53.1 | 54.5 |
| | | BioPET (IV = 0.86, Mw = 18700) | | 52.7 | | | | | |
| | | Virgin PET (IV = 0.44, Mw = 6700) | | | 52.7 | | | | |
| | | Virgin PET (IV = 0.75, Mw = 13100) | | | | 52.7 | | | |
| | | Virgin PET (IV = 1.08, Mw = unmeasurable) | | | | | 52.7 | | |
| | | Total | 100 | 100 | 100 | 100 | 100 | 100 | 100 |
| Catalyst [ppm] | | TBT | 500 | 500 | 500 | 500 | 500 | 500 | 500 |
| Polycondensation reaction time [min] | | | 60 | 60 | 60 | 60 | 60 | 80 | 60 |
| Resin properties | Glass transition temperature [°C] | | 70.7 | 71.7 | 72.9 | 73.3 | 73.1 | 68.7 | 65.0 |
| | Softening temperature [°C] | | 127.3 | 130.1 | 133.6 | 133.9 | 134.6 | 133.9 | 129.7 |
| | Acid value [meKOH/g] | | 19.6 | 18.5 | 13.4 | 15.5 | 15.4 | 5.5 | 7.1 |
| | Heat absorption [J/g] | | 1.8 | 0.6 | 1.4 | 0.8 | 0.3 | 1.1 | 0.8 |
| Toner properties | Fixation | Temperature [°C] | 167 | 171 | 172 | 171 | 170 | 170 | 168 |
| | | Evaluation | A | A | A | A | A | A | A |
| | Evaluation of storability | | S | S | S | S | S | A | A |
| | Fixation strength | Residual ratio [%] | 93 | 91 | 93 | 92 | 90 | 91 | 90 |
| | | Evaluation | A | A | A | A | A | A | A |

[Table 3]

|  |  | | Comparative Examples | | |
|---|---|---|---|---|---|
|  |  | | 1 | 2 | 3 |
| Ingredient composition [molar parts] | TPA | 27.9 | 67.9 | 27.9 |
|  | IPA |  |  |  |
|  | ADA | 0.1 | 0.1 | 0.1 |
|  | TMA |  |  |  |
|  | EG |  |  |  |
|  | BPP | 25.9 | 70 | 16 |
|  | BPE |  |  |  |
|  | TMP | 0.1 | 4 | 2 |
|  | Recycled PET (IV = 0.55, Mw = 8900) |  |  |  |
|  | Recycled PET (IV = 0.57, Mw = 9300) | 72 | 32 | 72 |
|  | BioPET (IV = 0.86, Mw = 18700) |  |  |  |
|  | Virgin PET (IV = 0.44, Mw = 6700) |  |  |  |
|  | Virgin PET (IV = 0.75, Mw = 13100) |  |  |  |
|  | Virgin PET (IV = 1.08, Mw = unmeasurable) |  |  |  |
| Ingredient composition [% by mass] | TPA | 15.9 | 25.8 | 12.6 |
|  | IPA |  |  |  |
|  | ADA | 0.05 | 0.03 | 0.06 |
|  | TMA |  |  |  |
|  | EG |  |  |  |
|  | BPP | 32.0 | 57.6 | 22.0 |
|  | BPE |  |  |  |
|  | TMP | 0.05 | 1.27 | 1.04 |
|  | Recycled PET (IV = 0.55, Mw = 8900) |  |  |  |
|  | Recycled PET (IV = 0.57, Mw = 9300) | 52.0 | 15.3 | 64.3 |
|  | BioPET (IV = 0.86, Mw = 18700) |  |  |  |
|  | Virgin PET (IV = 0.44, Mw = 6700) |  |  |  |
|  | Virgin PET (IV = 0.75, Mw = 13100) |  |  |  |
|  | Virgin PET (IV = 1.08, Mw = unmeasurable) |  |  |  |
|  | Total | 100 | 100 | 100 |
| Catalyst [ppm] | TBT | 500 | 500 | 500 |
| Polycondensation reaction time [min] |  | 120 | 120 | 120 |
| Resin properties | Glass transition temperature [°C] | 70.9 | 66.5 | 73.6 |
|  | Softening temperature [°C] | 124.7 | 116.3 | 197.5 |
|  | Acid value [mgKOH/g] | 19.4 | 11.3 | 13.9 |
|  | Heat absorption [J/g] | 2.8 | 0.0 | 26.3 |

(continued)

| | | | Comparative Examples | | |
|---|---|---|---|---|---|
| | | | 1 | 2 | 3 |
| Toner properties | Fixation | Temperature [°C] | 177 | 103 | - |
| | | Evaluation | B | S | - |
| | Evaluation of storability | | S | B | - |
| | Fixation strength | Residual ratio [%] | 93 | Cracks | - |
| | | Evaluation | A | B | - |

Abbreviations in Tables 1 to 3 are as follows. Blanks in the tables mean that the relevant components are not blended (i.e., blending amount = 0 % by mass or 0 molar part).

- TPA: Terephthalic acid
- IPA: Isophthalic acid
- ADA: Adipic acid
- TMA: Trimellitic anhydride
- EG: Ethylene glycol
- BPP: Polyoxypropylene-(2.3)-2,2-bis(4-hydroxyphenyl)propane
- BPE: Polyoxyethylene-(2.0)-2,2-bis(4-hydroxyphenyl)propane
- TMP: Trimethylolpropane
- Recycled PET: Recycled polyethylene terephthalate which is a recycled product of used PET
- BioPET: Virgin polyethylene terephthalate using plant-derived ethylene glycol
- Virgin PET: Unused polyethylene terephthalate
- TBT: Tetra-n-butoxytitanium

The IV value of PET was determined by dissolving 0.3 g of PET in 30 mL of a mixed solvent prepared by mixing phenol and 1,1,2,2-tetrachloroethane at a mass ratio of 1:1, and measuring the IV value of the resulting solution at 30 °C with an ubbelohde viscometer. The weight average molecular weight of PET was measured by gel permeation chromatography (GPC) with respect to a product obtained by dissolving 0.1 g of PET in 99.9 g of hexafluoro-2-propanol containing 5 mM sodium trifluoroacetate, and filtering the resulting solution through a polytetrafluoroethylene filter with a pore size of 0.45 μm. Dissolution of PET in hexafluoro-2-propanol was performed at room temperature (20 °C) or 45 °C.

As is clear from Tables 1 and 2, the polyester resins obtained in the examples enabled production of toners excellent in storability in a high-temperature environment, toner fixability and toner fixation strength.

In the present specification, the evaluation of the toner fixation strength described above also serves as the evaluation of the bonding strength with fiber materials. That is, a higher toner fixation strength (a higher residual ratio of image density) means a higher bonding strength between the polyester resin contained in the toner and the fiber material. In this sense, the polyester resins obtained in the examples had excellent bonding strength with fiber materials.

On the other hand, as is clear from Table 3, the polyester resin of Comparative Example 1, which had less amount of tri- or higher valent component-derived structural units, developed crystallinity during melt-kneading and was inferior in toner fixability.

The polyester resin of Comparative Example 2, which had less amount of structural units derived from the propylene oxide adduct of bisphenol A, had a heat absorption of 0 J/g when heat-treated at 150 °C for 30 minutes. This means that the polyester resin did not have a partially crystalline structure. The toner containing this polyester resin was inferior in storability in a high-temperature environment and the toner fixation strength. Further, the polyester resin of Comparative Example 2 had poor bonding strength with fiber materials.

[Industrial Applicability]

The polyester resin of the present invention can yield a toner excellent in storability in a high-temperature environment, toner fixability and toner fixation strength. Therefore, the polyester resin of the present invention is useful as a binder for toners.

Further, the polyester resin of the present invention is excellent in bonding strength with particles and fiber materials, and is therefore suitable as a binder resin for binding particles and fiber materials.

**Claims**

1. A polyester resin obtained by using polyethylene terephthalate, a polyvalent carboxylic acid component, and a polyhydric alcohol component,

   wherein the polyester resin comprises 1 molar part or more in total of at least one type of structural unit selected from the group consisting of a structural unit derived from a tri- or higher valent carboxylic acid and a structural unit derived from a tri- or higher hydric alcohol, with respect to 100 molar parts of structural units derived from an acid component, and
   wherein a heat absorption is 0.1 to 10 J/g as measured with respect to the polyester resin heat-treated at 150 °C for 30 minutes.

2. The polyester resin according to claim 1, which has a glass transition temperature of 65 °C or higher.

3. The polyester resin according to claim 1 or 2, which comprises 1 to 5 molar parts in total of at least one type of structural unit selected from the group consisting of the structural unit derived from the tri- or higher valent carboxylic acid and the structural unit derived from the tri- or higher hydric alcohol, with respect to 100 molar parts of the structural units derived from the acid component.

4. The polyester resin according to any one of claims 1 to 3, which comprises 1 to 3 molar parts in total of at least one type of structural unit selected from the group consisting of the structural unit derived from the tri- or higher valent carboxylic acid and the structural unit derived from the tri- or higher hydric alcohol, with respect to 100 molar parts of the structural units derived from the acid component.

5. The polyester resin according to any one of claims 1 to 4, wherein the tri- or higher valent carboxylic acid is at least one of trimellitic acid and trimellitic anhydride.

6. The polyester resin according to any one of claims 1 to 5, wherein the tri- or higher hydric alcohol is trimethylolpropane.

7. The polyester resin according to any one of claims 1 to 6, which comprises 18 to 35 molar parts of the structural unit derived from the propylene oxide adduct of bisphenol A, with respect to 100 molar parts of the structural units derived from the acid component.

8. The polyester resin according to any one of claims 1 to 7, wherein the polyethylene terephthalate is at least one of recycled polyethylene terephthalate and polyethylene terephthalate obtained using a plant-derived raw material.

9. A toner comprising the polyester resin of any one of claims 1 to 8.

10. A method for producing a polyester resin, comprising a step of reacting a mixture containing polyethylene terephthalate, a polyvalent carboxylic acid component, and a polyhydric alcohol component,
    wherein the mixture comprises 18 to 35 molar parts of a propylene oxide adduct of bisphenol A, and 1 to 5 molar parts in total of at least one selected from the group consisting of a tri- or higher valent carboxylic acid and a tri- or higher hydric alcohol, with respect to 100 molar parts of an acid component.

11. The method according to claim 10, wherein the step of reacting the mixture comprises at least one of an esterification reaction and a transesterification reaction.

12. The method according to claim 10 or 11, which further comprises a polycondensation reaction performed after the step of reacting the mixture.

## INTERNATIONAL SEARCH REPORT

| | International application No. |
|---|---|
| | PCT/JP2021/025119 |

### A. CLASSIFICATION OF SUBJECT MATTER
G03G 9/087(2006.01)i; C08G 63/668(2006.01)i
FI: C08G63/668; G03G9/087 331

According to International Patent Classification (IPC) or to both national classification and IPC

### B. FIELDS SEARCHED

Minimum documentation searched (classification system followed by classification symbols)
C08G63/00-64/42, G03G9/00-9/113

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2004-163808 A (KAO CORP.) 10 June 2004 (2004-06-10) claims, paragraphs [0020], [0025], examples | 1, 2, 5-9<br>3, 4, 10-12 |
| X | JP 2004-54258 A (MITSUI CHEMICALS, INC.) 19 February 2004 (2004-02-19) claims, paragraphs [0015], [0023], tables 1, 2, examples | 1-12 |
| X<br>A | JP 2005-517050 A (SAMSUNG ELECTRONICS CO., LTD.) 09 June 2005 (2005-06-09) claims, paragraphs [0023]-[0025], examples | 1, 2, 5-9<br>3, 4, 10-12 |
| X<br>A | JP 2019-99699 A (NICCA CHEMICAL CO., LTD.) 24 June 2019 (2019-06-24) claims, paragraphs [0026], [0030], [0031], [0033], [0043], [0046], tables 1, 2, examples | 1, 3-12<br>2 |
| A | JP 2019-104825 A (NICCA CHEMICAL CO., LTD.) 27 June 2019 (2019-06-27) claims, examples | 1-12 |

☒ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 August 2021 (27.08.2021) | 07 September 2021 (07.09.2021) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

## INTERNATIONAL SEARCH REPORT

| | | International application No. |
|---|---|---|
| | | PCT/JP2021/025119 |

### C (Continuation). DOCUMENTS CONSIDERED TO BE RELEVANT

| Category* | Citation of document, with indication, where appropriate, of the relevant passages | Relevant to claim No. |
|---|---|---|
| A | JP 2018-70705 A (NICCA CHEMICAL CO., LTD.) 10 May 2018 (2018-05-10) claims, examples | 1-12 |
| A | JP 2014-232169 A (KAO CORP.) 11 December 2014 (2014-12-11) claims, examples | 1-12 |

Form PCT/ISA/210 (continuation of second sheet) (January 2015)

**INTERNATIONAL SEARCH REPORT**
Information on patent family members

International application No.

PCT/JP2021/025119

| Patent Documents referred in the Report | Publication Date | Patent Family | Publication Date |
|---|---|---|---|
| JP 2004-163808 A | 10 Jun. 2004 | (Family: none) | |
| JP 2004-54258 A | 19 Feb. 2004 | US 2004/0067430 A1 claims, paragraphs [0137], [0157], tables 1, 2, examples EP 1367075 A1 CN 1467575 A KR 10-0553185 B1 TW 200307194 A | |
| JP 2005-517050 A | 09 Jun. 2005 | US 2005/0203277 A1 claims, paragraphs [0028], [0029], examples EP 1468034 A1 KR 10-2003-0049627 A KR 10-2003-0049624 A KR 10-2003-0056258 A KR 10-2003-0056257 A CN 1747982 A | |
| JP 2019-99699 A | 24 Jun. 2019 | (Family: none) | |
| JP 2019-104825 A | 27 Jun. 2019 | (Family: none) | |
| JP 2018-70705 A | 10 May 2018 | (Family: none) | |
| JP 2014-232169 A | 11 Dec. 2014 | (Family: none) | |

Form PCT/ISA/210 (patent family annex) (January 2015)

**EP 4 180 873 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020116802 A
- JP 2009276791 A
- JP 2017045041 A
- JP 2012233037 A